# EUROPEAN PATENT SPECIFICATION

(11) **EP 3 009 798 B1**
(45) Date of publication and mention of the grant of the patent: **20.02.2019**
(21) Application number: 15185899.0
(22) Date of filing: 18.09.2015
(51) Int. Cl.: G01C 21/34, G01C 21/36

(54) **PROVIDING ALTERNATIVE ROAD NAVIGATION INSTRUCTIONS FOR DRIVERS ON UNFAMILIAR ROADS**
BEREITSTELLUNG ALTERNATIVER STRASSENNAVIGATIONSANWEISUNGEN FÜR FAHRER AUF UNBEKANNTEN STRASSEN
FOURNITURE D'INSTRUCTIONS DE NAVIGATION ROUTIÈRE ALTERNATIVES POUR LES AUTOMOBILISTES SUR DES ROUTES NON FAMILIÈRES

(30) Priority: 15.10.2014 US 201414515366
(43) Date of publication of application: 20.04.2016
(73) Proprietor: Harman International Industries, Inc., Stamford, CT 06901 (US)
(72) Inventor: ROZMAN, Aleks, Stamford, CT 06901 (US)
(74) Representative: Bertsch, Florian Oliver

(56) References cited:
- EP-A2- 1 271 104
- WO-A1-02/17268
- WO-A1-2009/143876
- WO-A1-2010/040385
- US-A- 6 101 443
- US-A1- 2010 036 605
- US-B2- 7 908 081

## Description

### BACKGROUND

### TECHNICAL FIELD

The present disclosure relates to in-vehicle navigation systems, and more specifically, to providing alternative road navigation instructions for drivers on unfamiliar roads.

### BACKGROUND

Navigation systems in vehicles, such as automobiles, provide instructions to drivers for driving to selected destinations. Generally, such navigation systems analyze map data that includes road information to find one or more desirable paths to the selected destination. The navigation system may consider various data about road networks, such as mileage, travel time, speed limits, traffic, and disaster information in calculating such paths and then selecting one path for which to display navigation. Once the navigation system has selected such a path, the navigation system determines the current location of the vehicle and displays a map with indications to the driver for how the driver should proceed down roads in order to follow the calculated path. As the driver proceeds down the path, the navigation system updates the map being displayed to reflect current vehicle location.

One limitation of current navigation systems is that such navigation systems generally only provide navigation instructions upon receiving a specific request from an end-user, such as the driver. More specifically, at first, an end-user initializes the navigation system. The navigation system subsequently prompts the end-user for a destination. Then, upon receiving an appropriate command from the end user to begin providing navigation, the navigation system calculates a path to the entered destination and begins providing driving instructions to the driver. Such navigation systems generally do not provide driving instructions unless specifically requested to do so by a driver. However, when a driver is driving, the driver is generally unable to provide such a request. Thus, while a driver is driving, the driver is generally unable to obtain new driving instructions.

Document WO 2010/040385 A1 discloses a navigation apparatus that stores information indicative of one or more previous routes followed by the navigation apparatus, determines whether or not a user is traversing an unfamiliar route, and automatically re-calculates a route in the event that a user deviates from the previously calculated route during navigation.

As the foregoing illustrates, a more flexible navigation system for providing navigation assistance would be useful.

### SUMMARY

A computer-implemented method for providing driving instructions is provided according to claim 1.

A navigation system is also provided in claim 9.

### BRIEF DESCRIPTION OF THE SEVERAL VIEWS OF THE DRAWINGS

Figure 1A illustrates a passenger compartment of a vehicle including a navigation system, according to various embodiments;
Figure 1B is a more detailed illustration of the navigation system of Figure 1A, according to various embodiments;
Figure 2 is a more detailed illustration of the navigation software of Figure 1B, according to various embodiments;
Figure 3 illustrates a portion of a road map illustrating a distance-based mode for providing an alternative driving path, according to various embodiments;
Figure 4 illustrates a portion of a road map illustrating a traffic-based mode for providing an alternative path, according to various embodiments;
Figure 5 is a flow diagram of method steps for identifying an alternative navigation path based on a distance-based mode, according to various embodiments; and
Figure 6 is a flow diagram of method steps for identifying an alternative navigation path based on a traffic-based mode, according to various embodiments.

### DETAILED DESCRIPTION OF THE DRAWINGS

In the following, reference is made to embodiments presented in this disclosure. However, the scope of the present disclosure is not limited to specific described embodiments. Furthermore, although embodiments disclosed herein may achieve advantages over other possible solutions or over the prior art, whether or not a particular advantage is achieved by a given embodiment is not limiting of the scope of the present disclosure. Thus, the following aspects, features, embodiments and advantages are merely illustrative and are not considered elements or limitations of the appended claims except where explicitly recited in a claim(s).

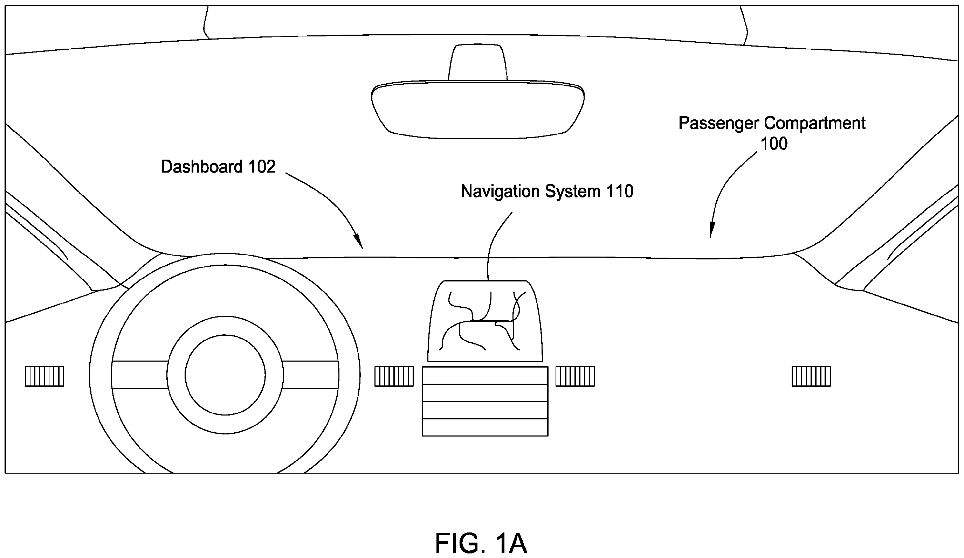

Figure 1A illustrates a passenger compartment 100 of a vehicle including a navigation system 110, according to various embodiments. As shown, the passenger compartment 100 includes a navigation system 110 positioned proximate a dashboard 102 providing various instrumentation for a driver of a vehicle.

In operation, the navigation system 110 provides navigation information to a driver operating a vehicle. Specifically, the navigation system 110 is configured to accept input from a driver or other person (an "end-user") including a destination location, to analyze road information, to calculate or determine one or more driving paths for the driver, to display such driving paths overlaid on a map, and to output associated driving instructions to the driver. In some embodiments, the navigation system 110 is be configured to analyze various information in order to determine one or more "desirable" paths to provide to the driver, where "desirable" generally refers to a path with the lowest or nearly the lowest total driving time, the lowest or nearly the lowest total mileage, the lowest or nearly the lowest cumulative toll requirements, or the like. Further, in some embodiments, the navigation system 110 is be configured to receive and analyze traffic information or other road-condition information (such as accidents, construction, and the like) in calculating such paths. In some embodiments, the navigation system 110 is configured to calculate and provide several alternative routes and to allow the driver to select one such path.

As stated above, the navigation system 110 displays a map for the driver and also displays path information associated with the chosen path. The path information includes an indication of which roads the driver should proceed down and the amount of vehicle traffic on those roads. As the vehicle progresses down a particular path as directed by the driver, the navigation system 110 updates the displayed map to indicate the next driving steps the driver is to follow.

Although the navigation system 110 is illustrated as being embedded in and in the center of the dashboard 102, the navigation system 110 may alternatively be located in other parts of the passenger compartment 100 and/or may be a standalone module. Other variations in location and configuration are possible as well.

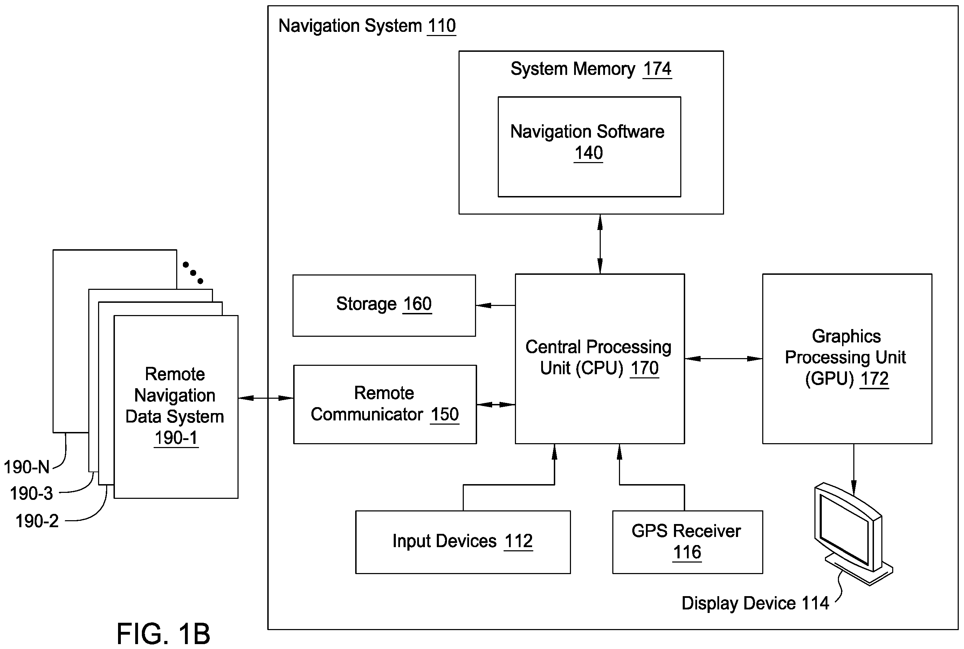

Figure 1B is a more detailed illustration of the navigation system 110 of Figure 1A, according to various embodiments. As shown, the navigation system 110 includes a central processing unit (CPU) 170, graphics processing unit (GPU) 172, system memory 174, storage 160, remote communicator 150, input devices 112, and display device 114. The remote communicator 150 communicates with remote navigation data system 190 as described in more detail below.

The CPU 170 generally comprises a programmable processor that executes program instructions to manipulate input data. The CPU 170 may include any number of processing cores, memories, and other modules for facilitating program execution. System memory 174 generally comprises storage chips such as random access memory (RAM) chips that store applications and data for processing by CPU 170.

System memory 174 stores navigation software 140, which includes software for identifying and displaying driving paths. The GPU 172 generally comprises a programmable or fixed function processor that accepts commands and data from CPU 170 and generates pixels for display on display device 114. The input devices 112 may include various types of input devices, such as buttons, a microphone, cameras, a touch-based input device integrated with display device 114 (i.e., a touch screen), and other input devices for providing input information to the CPU 170.

In various embodiments, storage 160 includes non-volatile memory such as optical drives, magnetic drives, flash drives, or other storage. Remote communicator 150 includes modules for communications with one or more remote navigation data systems 190. In various embodiments, remote communicator 150 includes a wired or wireless communication module such as a communication module based on the IEEE 802.11 standard, based on the Bluetooth standard, based on one or more cellular networking technology standards, or based on other wired or wireless communications technologies. The remote navigation data systems 190 are remote systems that provide navigation information such as driving routes, traffic information, disaster information (e.g., an accident, road closing, or the like), weather information, and other information about road conditions, vehicle conditions, or the like. In various embodiments, the remote navigation data system 190 includes servers that are coupled to a computer network such as the Internet, and thus is accessible via a remote communicator 150 that is coupled to a computer network such as the Internet. The receiver 116 using data such as global positioning system (GPS) data or other data determines global position of the vehicle (navigation system 110, driver, and so on). The GPS receiver 116 operates based on one or more of the global positioning system of manmade Earth satellites, various electromagnetic spectrum signals (such as cellular tower signals, wireless internet signals, and the like), or other signals or measurements, and/or on a combination of the above items. In various embodiments, the navigation software 140 accesses global positioning information from GPS receiver 116 in order to determine a current location of the vehicle.

In operation, the CPU 170 is the master processor of the navigation system 110, controlling and coordinating operation of other system components. In particular, the CPU 170 receives input via input devices 112 and executes navigation software 140, stored in system memory 174, to output navigation information to display device 114.

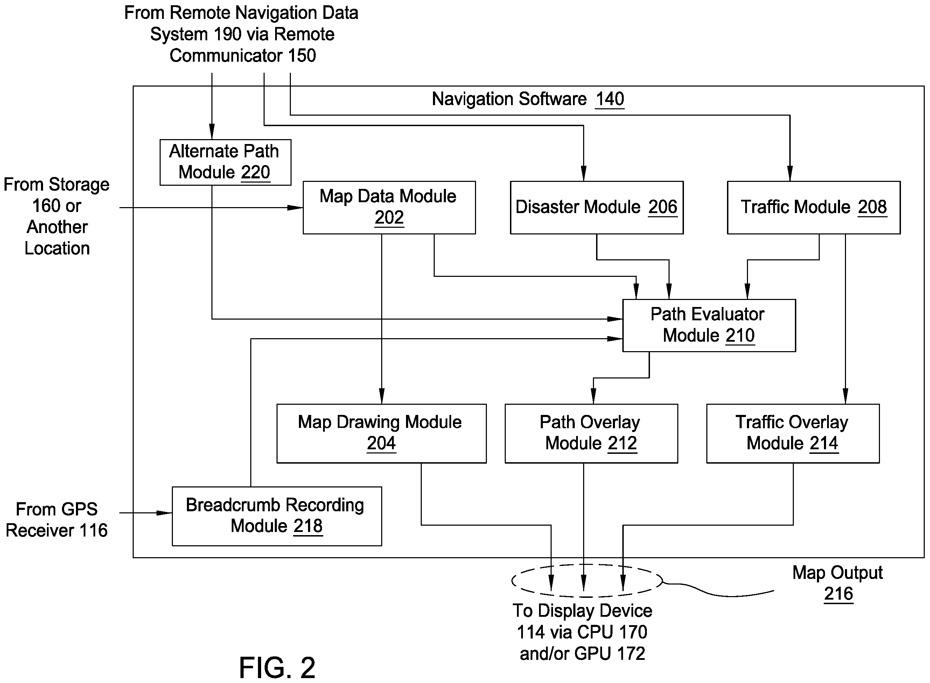

Figure 2 is a more detailed illustration of the navigation software 140 of Figure 1B, according to various embodiments. As shown, the navigation software 140 includes a map data module 202, a disaster module 206, a traffic module 208, a path evaluator module 210, a map drawing module 204, a path overlay module 212, a traffic overlay module 214, and an alternate path module 220.

The map data module 202 fetches map data from storage 160 or another location (such as a networked computer like the remote navigation data system 190). The map data module 202 forwards the map data to the path evaluator module 210 and to the map drawing module 204. Some embodiments of the navigation software 140 do not include map data module 202, and path evaluator module 210 and map drawing module 204 directly fetch map data.

Disaster module 206 fetches disaster data from remote navigation data system 190 via the remote communicator 150. The disaster data includes information about disasters such as whether an accident has occurred, where the accident has occurred, whether a road closing exists, and the like. The disaster module 206 forwards the disaster information to the path evaluator module 210. Some embodiments of navigation software 140 do not include disaster module 206. In such embodiments, path evaluator 210 either directly fetches disaster information from remote navigation data system 190 via remote communicator 150 or does not evaluate disaster information. In some embodiments, the path evaluator module 210 analyzes the disaster information in order to calculate a driving path.

Traffic module 208 fetches traffic information from remote navigation data system 190 via remote communicator 150 and forwards the traffic information to the path evaluator module 210 as well as the traffic overlay module 214. The traffic information includes information such as the amount of congestion on various roads, and the like. Alternate path module 220 fetches alternate paths from remote navigation data system 190 via remote communicator 150 and forwards the paths to path evaluator module 210. These alternate paths represent paths not calculated by path evaluator module 210 but that path evaluator module 210 may nonetheless decide to present to a driver as a path to the destination point that the driver entered.

The path evaluator module 210 calculates or otherwise identifies (i.e., from a database, from memory, or the like) paths for display to a driver based on the map information provided by map data module 202. In some embodiments, the path evaluator module 210 also examines disaster information, traffic information, and alternate path information to generate the paths. In general, the path evaluator module 210 examines road data from within map information and evaluates various information included in that road data, such as distances, speed limits, tolls, or the like, to determine one or more "desirable" paths. As disclosed above, a "desirable" path refers to a path with the lowest or nearly the lowest total driving time, the lowest or nearly the lowest total mileage, the lowest or nearly the lowest cumulative toll requirements, or a path having one or more other "optimal" features.

In some embodiments, road data is data that is stored in the map information and that is stored as a graph that includes nodes and road segments connecting the nodes. The road segments represent subdivisions of roads. In various embodiments, these road segments are delineated based on where intersections exist, where speed limit changes exist, and/or based on other road features. Nodes represent locations between the different road segments and may represent, for example and without limitation, intersections in the roads, locations where the speed limit changes, or other road features. In some embodiments, various additional data about the characteristics of the road segments and nodes in the stored road data are also stored in the road data. For example and without limitation, in some embodiments, the navigation system 110 stores data regarding the speed limit, the direction of traffic flow, whether the road segment is designated as one-way, and so on. In addition to this "fixed" road information, in some embodiments, when evaluating paths, the path evaluator module 210 obtains time-variant information like traffic data including indications such as whether there is low congestion, high congestion, or a full stop. In various embodiments, the traffic data includes more detailed information such as the speed of traffic, and the like.

The path evaluator module 210 evaluates the graph information associated with the map, along with other obtained information, to calculate one or more "desirable" paths from a starting point to a destination, by attempting to minimize values (such as travel time, mileage, and the like) associated with the road segments. In some embodiments, the path evaluator module 210 implements shortest path algorithms for calculating such paths. The path evaluator module 210 also accepts alternative path data from alternative path module 220 or from local memory (or directly from remote navigation data system 190 via remote communicator 150 if alternate path module 220 is not present). In order to choose a particular path to display for a driver, path evaluator module 210 compares various data for these alternative paths (such as transit time, mileage, toll information, and the like) to the paths calculated by the path evaluator module 210. Path evaluator module 210 presents one or more of these alternative paths as a substitute for or in addition to any calculated paths to the driver for navigation if the path evaluator module 210 determines that these alternative paths are "more desirable" than the calculated paths. In some embodiments, the driver may select one of these paths as the path to be presented by navigation software 140 for navigation while the driver is driving.

The map drawing module 204, path overlay module 212, and traffic overlay module 214 work together to present navigation information to a driver. More specifically, the map drawing module 204 receives map data from the map data module 202 and draws a portion of the map data surrounding the current location of the vehicle. The map drawing module 204 may include a maneuver module that provides instructions to the driver. In other words, the maneuver module may describe next actions that the driver should take such as "turn left." The instructions provided by maneuver module may be one or both of visual and verbal. In some embodiments, the map driver module does not include the maneuver module and the maneuver module is included as a standalone module in navigation software 140. The path overlay module 212 draws the path selected by the user, highlighting roads and indicates other road information (such as speed limits, direction of traffic, and the like) regarding the roads in the vicinity of the driver. The traffic overlay module 214 draws traffic information over the roads drawn by the map drawing module 204. In embodiments that do not include the traffic overlay module 214 and/or that do not fetch traffic data from remote navigation data system 190, no traffic information is drawn. The output from the map drawing module 204, path overlay module 212, and, if present, the traffic overlay module 214, together constitute the map output 216. Display device 114 displays this map output upon being commanded by, for example and without limitation, the CPU 170 or GPU 172.

As the vehicle travels down roads, the breadcrumb recording module 218 records "breadcrumbs" (also referred to herein as "position descriptors"). Each breadcrumb is an indication of the current position of the vehicle and also includes the direction of the vehicle and the time of day and date at which the vehicle was at that position. Thus, as a driver drives on a particular road, the breadcrumb recording module 218 records breadcrumbs corresponding to the position and time of the vehicle on the road. The breadcrumb recording module 218 may store the breadcrumbs locally (e.g., in storage 160) or remotely (e.g., in one or more remote navigation data systems 190). In some embodiments, the breadcrumb recording module 218 stores a large number of breadcrumbs over a long period of time. In some embodiments, the breadcrumb recording module 218 stores breadcrumbs during the entire lifetime of the navigation system 110. If the breadcrumbs are stored remotely, in the remote navigation data system 190, then the breadcrumbs may be associated with a user account associated with the driver. Thus, in some embodiments, at least some breadcrumbs date back to before the driver of the vehicle obtained the navigation system 110 (for example and without limitation, if stored by a previous navigation system associated with the user account).

Over the course of operation, the navigation software 140 identifies paths that are familiar to or are known to the driver of the vehicle (referred to herein as "known paths"). More specifically, in addition to recording breadcrumbs, the breadcrumb recording module 218 identifies and records known paths based on the recorded breadcrumbs. The breadcrumb recording module 218 identifies known paths based on strings of breadcrumbs that are recorded consecutively in time. These strings of breadcrumbs are deemed to be a known path if, for each road segment along the length of these strings of breadcrumbs, a number of breadcrumbs greater than or equal to a threshold number are stored. The breadcrumb recording module 218 records these known paths in local storage (e.g., storage 160) or in remote storage (e.g., in remote navigation data system 190).

While a driver is driving the vehicle, the navigation software 140 monitors the current location of the vehicle and the stored breadcrumbs to determine whether the vehicle has deviated from a known path. The navigation software 140 makes such a determination while the navigation software 140 is not presenting navigation information to the driver. In such embodiments, the navigation software 140 presents navigation information to the driver without being prompted by the driver. Further, in such embodiments, the navigation software 140 was not already presenting navigation information to the driver when the navigation software 140 determines that new navigation information should be presented to the driver. When the navigation software 140 determines that the vehicle has deviated from a known path, the navigation software 140 calculates a new path and displays new navigation information associated with the new path to the driver to assist the driver with returning to a known path. The process of calculating such a new path is described in greater detail below.

In addition to being triggered when the driver has deviated from a known path, in some embodiments, the navigation software 140 calculates a new path when the driver is following a known path, but when certain undesirable conditions arise on that known path. For example and without limitation, in some embodiments, when the navigation software 140 detects an obstacle such as traffic congestion on the known path, the navigation software 140 calculates one or more new paths to present to the driver as alternate paths. In other embodiments, the navigation software 140 calculates new paths when the navigation software 140 detects an accident, road construction, road closures, or other adverse road conditions.

In order to detect a deviation from a known path, the path evaluator module 210 periodically examines the stored known paths to determine whether the vehicle is currently on a road that is not included in a known path. Alternatively, the path evaluator module 210 may examine the breadcrumbs stored by the breadcrumb recording module 218. If the path evaluator module 210 determines that a number of breadcrumbs is less than a particular threshold number for the current road segment (the road segment that the vehicle is currently on), then the path evaluator module 210 determines that the vehicle has deviated from a known path. Of course, if the path evaluator module 210 determines that a number of breadcrumbs greater than or equal to the threshold number are stored for the current segment, then the path evaluator module 210 does not determine that the vehicle has deviated from a known path.

As stated above, upon determining that the vehicle has deviated from a known path, the path evaluator module 210 searches for an alternative path for the driver. Such an alternative path routes the vehicle back to the known path.

If the navigation software is not providing navigation to the driver when the driver turns off a path, then the navigation software 140 routes the driver based on a "predicted path." The term "main path" as used below refers collectively to both the "predicted path" and the path that the navigation software 140 is displaying to the driver when the driver turns off this path.

A predicted path is a path that the path evaluator module 210 determines that the vehicle was driving on when the vehicle turned off the known path if no navigation is being provided by the navigation software 140. In some embodiments, the path evaluator module 210 analyzes stored breadcrumbs and/or known paths to determine a predicted path. In some embodiments, the path evaluator module 210 identifies a predicted path as beginning at the location at which the driver turned on the vehicle and ending at a predicted destination. Such a predicated path follows a stored known path. The known path is the path that the driver was driving on prior to turning onto a road segment for which fewer than a threshold number of breadcrumbs are stored. More specifically, the path evaluator module 210 matches the path that the driver was driving on to a known path that is stored. The predicted destination is the most common location along that known path at which the driver turns off the vehicle. In various embodiments, the path evaluator module 210 analyzes the age of breadcrumbs, giving preference to newer breadcrumbs, in order to identify a predicted path. More specifically, the path evaluator module 210 chooses a known path for which breadcrumbs are the most recent.

To route the vehicle back to the main path, the path evaluator module 210 may search for an alternative path for the driver in one of two modes. In a first mode, a distance-based mode, the path evaluator module 210 routes a vehicle back to the main path at a return point that is at least a specified distance along that main path from the point at which the vehicle turned off that main path. In a second mode, a traffic-based mode, the path evaluator module 210 routes a vehicle back to the main path at a return point on the main path at which traffic congestion is below a particular threshold, in order to help the vehicle avoid obstacles that may be causing the traffic congestion. Each of these modes is described in more detail below.

In the first mode, the distance-based mode, the path evaluator module 210 calculates a new path that returns the vehicle to the main path at a point that is not less than a fixed distance along the main path from where the driver turned off that main path. This "fixed" distance may be constant, or may be dynamically adjusted based on a variety of factors such as distance to destination, speed of traffic, speed limit of the road, or other factors. The path evaluator module 210 calculates this new path with the restriction that this new path is not allowed to follow the main path for at least a predetermined distance from the point at which the driver turned off of the known road.

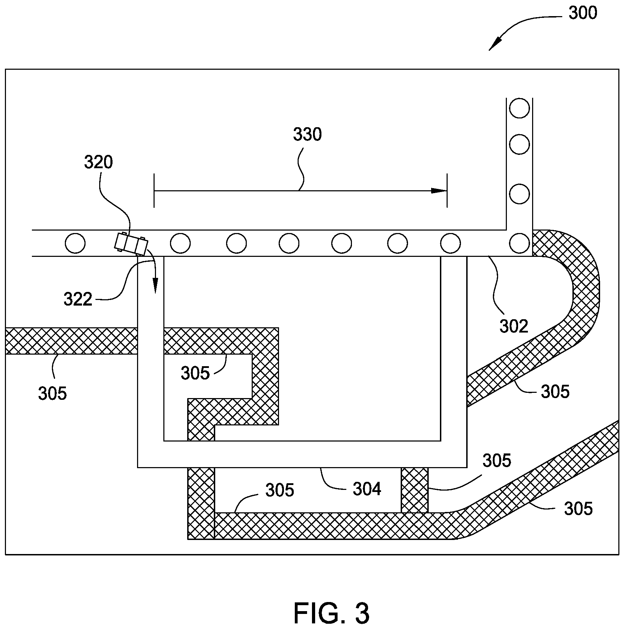

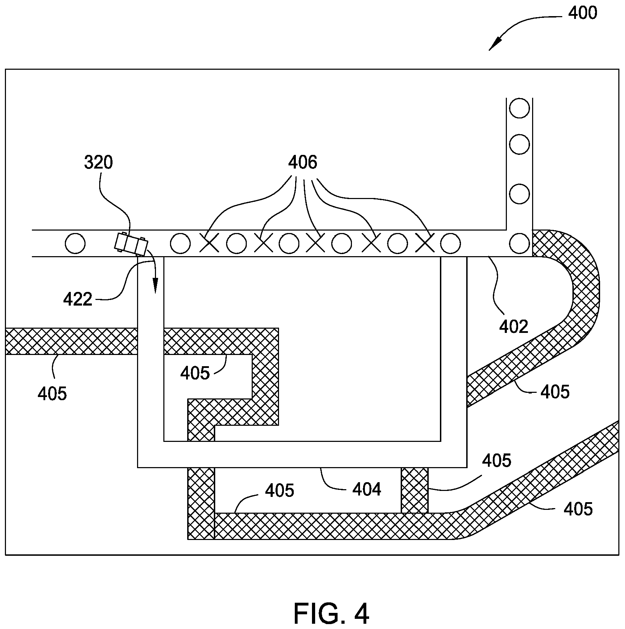

The second mode, the traffic-based mode, is similar to the distance-based mode. Specifically, in the second mode, the traffic-based mode, the path evaluator module 210 calculates a new path that returns the vehicle to the main path. However, unlike the distance-based mode, the path evaluator module 210 does not calculate a new path that returns to the main path a fixed distance down that main path. Instead, in the traffic-based mode, the path evaluator module 210 examines traffic information to determine a point on the main path at which traffic congestion is below a threshold value. The path evaluator module 210 calculates a new path that returns the vehicle to the main path at a point that is at least as far down the main path as the determined point on the main path at which traffic congestion is below the threshold value. Traffic congestion may be measured in any number of ways. In one example, traffic congestion is measured by determining how much slower traffic is traveling than the speed limit. The distance-based mode is discussed in more detail with respect to Figure 3 and the traffic-based mode is discussed in more detail with respect to Figure 4.

The path evaluator module 210 may route the vehicle back to the main path at a point that is further along the main path than either a point that is a fixed distance past the point at which the vehicle turned off the road or the first point on the main path for which traffic is below a particular traffic threshold. Further, the path evaluator module 210 may simply route the vehicle to the intended destination for that vehicle. If the main path is the path that was being presented to the driver when the vehicle turned off of the main path, then the intended destination is the destination for that path. If the main path is a predicted path, then the intended destination is the location along that predicted path where the vehicle most frequently shuts off.

The architecture for the navigation software 140 shown in figure 2 is illustrative and various alternatives are possible. Functionality described as being performed by one particular module may instead be performed by another module. Additionally, in some embodiments, not all of the functionality described above is performed. Further, in various embodiments, the illustrated interconnection between modules may be varied.

Figure 3 illustrates a portion of a road map 300 illustrating the distance-based mode for providing an alternative driving path, according to various embodiments. As shown, the road map 300 includes a first path 302 that is known to a driver (as indicated by breadcrumbs 310) and a second path 304 that is not known to the driver (as indicated by the fact that no breadcrumbs 310 exist on second path 304). Additional roads 305 that are not part of either the first path 302 or the second path 304 are shown as well.

As indicated by turning arrow 322, vehicle 320 is currently in the process of turning onto a road associated with the second path 304. When the vehicle 320 turns onto that road, the path evaluator module 210 detects that the vehicle 320 is on a road segment for which fewer than a threshold number of breadcrumbs are stored. In response, the path evaluator module 210 calculates an alternate path for the vehicle to follow. As described above, the path evaluator module 210 may calculate an alternative path by identifying a point on the first path 302 (the "main path") based on a fixed distance 330 along that main path from the point at which the vehicle turned off the main path 302. The point that the path evaluator module 210 obtains by following the main path 302 for at least the fixed distance is set as the destination point for navigation.

To generate a new path for the driver, the path evaluator module 210 begins with the current location of the vehicle 320, and determines a path to the destination point described above, with the condition that the path cannot pass through the main path until the vehicle 320 arrives at that destination point. Thus the path evaluator determines that the new path is second path 304, which, when followed by the driver, results in the driver being on the first path 302 after at least the fixed distance 330.

Figure 4 illustrates a portion of a road map 400 illustrating the traffic-based mode for providing an alternative path, according to various embodiments. As shown, the road map 400 includes a first path 402 that is known to a driver (as indicated by breadcrumbs 310) and a second path 404 that is not known to the driver (as indicated by the absence of breadcrumbs 310 on second path 404). Additional roads 405 that are not part of either the first path 402 or the second path 404 are shown as well.

As with Figure 3, turning arrow 422 indicates that vehicle 320 is currently in the process of turning onto a road associated with the second path 404. Also as with Figure 3, when the vehicle 320 turns onto that road, the path evaluator module 210 detects that the vehicle 320 is on a road for which a number of breadcrumbs below a threshold are stored. At this point, the navigation software 140 calculates a path to a destination point.

The navigation software 140 determines the destination point based on traffic data received from traffic module 208. More specifically, the path evaluator module 210 determines that traffic congestion (indicated with traffic congestion markers 406) along the path that the vehicle 320 turned off of is above a particular threshold for a certain distance along that path. The path evaluator module 210 identifies a location on the first path 402 path at which the traffic congestion is below the threshold. The path evaluator module 210 sets the point at which the traffic returns to being below the threshold to be the destination for a new path that the path evaluator module 210 generates. The path evaluator module 210 generates this new path and presents this new path to the driver of the vehicle 320 for navigation. The path evaluator module 210 generates this path, with the condition that the path cannot travel along the first path 402 where the traffic data indicates that traffic congestion is above a threshold.

In some embodiments, determining the point at which traffic is below a threshold includes examining traffic flow for the side of the road that is opposite to the side the driver was driving on when the driver turned off the road and identifying the starting point of the traffic congestion on that side of the road. The starting point of that congestion is the point at which traffic is below a threshold.

In the example illustrated in Figure 4, when the vehicle 320 turns off the first path 402, the path evaluator module 210 determines that the vehicle is on a road on which the driver has not yet traveled. More specifically, the path evaluator module 210 determines that the vehicle is on a road for which a number of breadcrumbs 310 less than a threshold number are stored. The path evaluator module 210 thus examines traffic data for the first path 402 and determines a point along the first path 402 after which traffic congestion is below a particular threshold. The path evaluator module 210 then calculates a path from the location of the vehicle 320 to this determined point and displays that path to the driver for the driver to follow.

The decision of whether to use the distance-based mode or the traffic-based mode may be based on a variety of factors. In one example, the navigation software 140 presents the driver with a choice of the two modes and selects one of the modes based on the choice of the driver. In another example, the navigation software 140 defaults to the traffic-based mode if traffic information is available and otherwise is set to the distance-based mode.

In both the distance-based mode and the traffic-based mode, the navigation software 140 calculates a path to a particular destination point that is determined either via a distance (distance-based mode) or via traffic information (traffic-based mode). In one alternative embodiment, the path evaluator module 210 determines the destination point as the first familiar intersection past either the fixed distance in distance-based mode or the point at which the traffic falls below a traffic threshold in the traffic-based mode. A familiar intersection is an intersection for which the number of breadcrumbs stored for that intersection is above a threshold for at least two perpendicular directions.

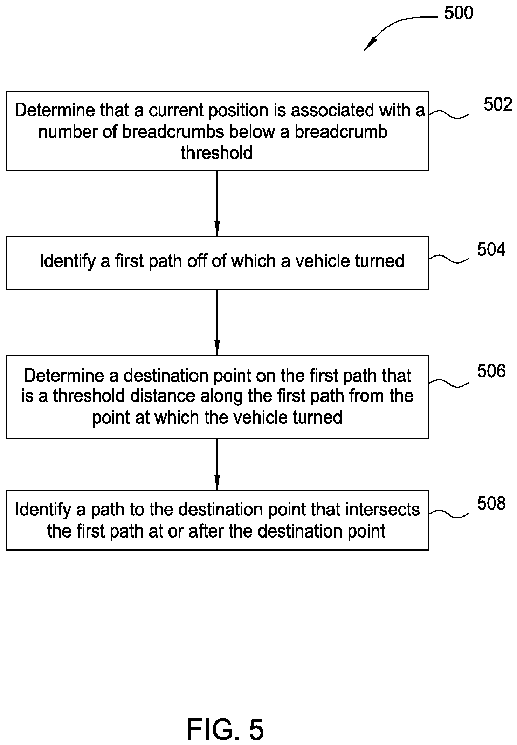

Figure 5 is a flow diagram of method steps for identifying an alternative navigation path based on a distance-based mode, according to various embodiments.

As shown, a method 500 begins at step 502, at which a path evaluator module 210 determines that a current position of a vehicle is associated with a number of breadcrumbs below a breadcrumb threshold. The breadcrumb threshold may be 1 or may be a higher number and may be modifiable. At step 504, the path evaluator module 210 identifies a main path off of which the vehicle turned. At step 506, the path evaluator module 210 determines a destination point that is a threshold distance along the main path from the point at which the vehicle turned. At step 508, the path evaluator module 210 identifies a path that intersects the first path at or after the destination point.

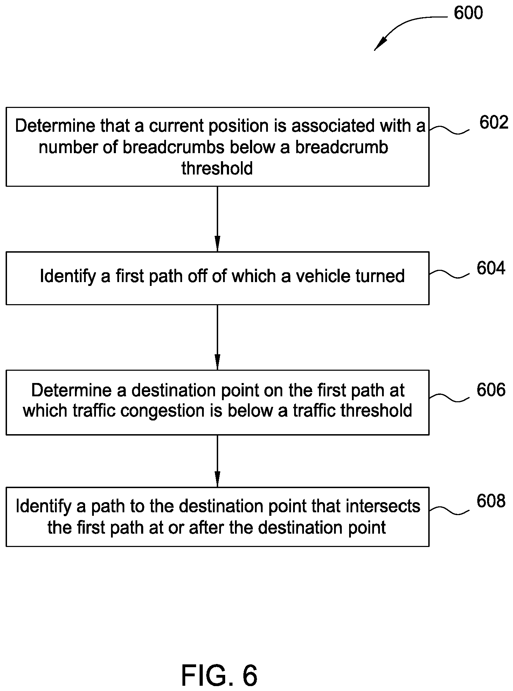

Figure 6 is a flow diagram of method steps for identifying an alternative navigation path based on a traffic-based mode, according to various embodiments.

As shown, a method 600 begins at step 602, at which a path evaluator module 210 determines that a current position of a vehicle is associated with a number of breadcrumbs below a breadcrumb threshold. As described above, the breadcrumb threshold may be 1 or may be a higher number and may be modifiable. At step 604, the path evaluator module 210 identifies a main path off of which a vehicle turned. At step 606, the path evaluator module 210 determines a destination point on the main path at which traffic congestion is below a traffic threshold. For this purpose, the path evaluator module 210 may fetch traffic data from the remote navigation data system 190 (e.g., via the traffic module 208). The purpose of fetching traffic information is so that the driver is not placed back onto the main path at a point with undesirably high traffic congestion. At step 608, the path evaluator module 210 identifies a path from the current position of the vehicle to the destination point that intersects the first path at or after the destination point.

In sum, techniques are provided for displaying alternative navigation routes to drivers. A breadcrumb recording module stores breadcrumbs for a vehicle and also stores known or predicted paths. While a vehicle is traveling down a known road, if the vehicle turns off of that road onto a road for which a number of breadcrumbs lower than a breadcrumb threshold are stored, then navigation software searches for an alternative route. The alternative route may be calculated in either a distance-based mode or a traffic-based mode. In the distance-based mode, the navigation software returns the vehicle to a point on the known path that the vehicle turned off of that is a fixed distance past that point. In the traffic-based mode, the navigation software returns the vehicle to a point on the known that that the vehicle turned off of that is past detected traffic.

One advantage of the disclosed techniques is that they provide driving instructions for alternative paths to a driver that turns off of a known path. By providing such alternative paths, the techniques assist the driver with avoiding obstacles (traffic, construction, or the like) that may have caused the driver to turn from that known path. Another advantage is that, by providing driving instructions when a driver is determined to be on an "unknown" path, the techniques disclosed herein allow a driver to learn driving instructions for new paths that are unknown to the driver and thus serve as a teaching aid.

The descriptions of the various embodiments have been presented for purposes of illustration, but are not intended to be exhaustive or limited to the embodiments disclosed.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

Embodiments of the disclosure may be provided to end users through a cloud computing infrastructure. Cloud computing generally refers to the provision of scalable computing resources as a service over a network. More formally, cloud computing may be defined as a computing capability that provides an abstraction between the computing resource and its underlying technical architecture (e.g., servers, storage, networks), enabling convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

Typically, cloud computing resources are provided to a user on a pay-per-use basis, where users are charged only for the computing resources actually used (e.g. an amount of storage space consumed by a user or a number of virtualized systems instantiated by the user). A user can access any of the resources that reside in the cloud at any time, and from anywhere across the Internet. In context of the present disclosure, a user may access applications (e.g., video processing and/or speech analysis applications) or related data available in the cloud.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A method implemented via navigation software executing in a vehicle navigation system, the method comprising:
recording breadcrumbs, wherein each breadcrumb indicates a current position of the vehicle, the direction of the vehicle, and the time of the day and date at which the vehicle was at that position;
determining, while the navigation software is not providing navigation information to a driver of the vehicle, that the vehicle has turned onto a first road segment and deviated from a first path that is deemed to be a known path to the driver by determining that a first number of stored breadcrumbs associated with the first road segment is below a first threshold number of breadcrumbs for the first road segment, wherein a known path is identified based on breadcrumbs that are recorded consecutively in time, and wherein a particular road segment is part of a known path when a number of stored breadcrumbs associated with the particular road segment is greater than or equal to a threshold number of breadcrumbs for the particular road segment;
in response to determining that the vehicle has deviated from the first path that is deemed a known path:
determining a location along the first path at which to return the vehicle, wherein determining the location along the first path at which to return the vehicle occurs without being prompted by the driver of the vehicle;
identifying a second path that returns the vehicle to the first path at the location; and
starting to display driving instructions associated with the second path that returns the vehicle to the first path.

2. The method of claim 1, wherein determining the location along the first path at which to return the vehicle comprises determining the location based on a distance along the first path.

3. The method of claim 2, wherein determining the location based on the distance along the first path comprises identifying a location on the first path that is at least a threshold distance along the first path from a point at which the vehicle deviated from the first path.

4. The method of any of the preceding claims, wherein determining the location along the first path at which to return the vehicle comprises determining the location based on traffic along the first path.

5. The method of claim 4, wherein determining the location based on traffic along the first path comprises identifying a location on the first path that is farther along the first path than a point at which the vehicle deviated from the first path and for which associated traffic data indicates that a traffic level is below a traffic threshold.

6. The method of any of the preceding claims, further comprising identifying the first path based on a plurality of stored breadcrumbs associated with at least one segment of the first path.

7. The method of claim 6, wherein the identified first path comprises a predicted path and a number of breadcrumbs associated with the at least one segment is above a second threshold number of breadcrumbs for the at least one segment.

8. The method of any of the preceding claims, wherein the second path comprises a path that extends from where the vehicle left the first path to the location along the path at which to return the vehicle.

9. A navigation system in a vehicle, the navigation system comprising:
a global positioning system receiver, GPS receiver, configured to obtain location information for the vehicle;
a central processing unit coupled to the GPS receiver and configured to: record breadcrumbs based on the location information received from the GPS receiver as the vehicle travels along a road, wherein each breadcrumb indicates a current position of the vehicle, the direction of the vehicle, and the time of the day and date at which the vehicle was at that position;
determine, while the navigation system is not providing navigation information to a driver of the vehicle, that the vehicle has deviated from a first path deemed to be a known path by determining that the vehicle has turned onto a first road segment and that a first number of recorded breadcrumbs associated with the first road segment is below a first threshold number of breadcrumbs for the first road segment, wherein a known path is identified based on breadcrumbs that are recorded consecutively in time, and wherein a particular road segment is part of a known path when a number of stored breadcrumbs associated with the particular road segment is greater than or equal to a threshold number of breadcrumbs for the particular road segment;
in response to determine that the vehicle has deviated from the first path that is deemed a known path:
determine a location along the first path at which to return the vehicle, wherein determining the location along the first path at which to return the vehicle occurs without being prompted by the driver of the vehicle;
identify a second path that returns the vehicle to the first path at the location; and
provide driving instructions associated with the second path that returns the vehicle to the first path.

10. The navigation system of claim 9, wherein the central processing unit is configured to provide driving instructions upon identifying that the vehicle has deviated from the first path by identifying a second path that extends from a deviation point at which the vehicle has deviated from the first path to a destination point on the first path.

11. The navigation system of claim 10, further comprising calculating the destination point based on a predefined distance from the deviation point.

12. The navigation system of claim 10, further comprising calculating the destination point based on traffic along the first path.

## Patentansprüche

1. Verfahren, das über eine Navigationssoftware implementiert ist, die in einem Fahrzeugnavigationssystem ausgeführt wird, wobei das Verfahren Folgendes umfasst:
Aufzeichnen von Breadcrumbs, wobei jeder Breadcrumb eine aktuelle Position des Fahrzeugs, die Richtung des Fahrzeugs und die Uhrzeit und das Datum angibt, an dem sich das Fahrzeug an dieser Position befand;
Bestimmen, während die Navigationssoftware einem Fahrer des Fahrzeugs keine Navigationsinformationen bereitstellt, dass das Fahrzeug auf ein erstes Straßensegment abgebogen und von einem ersten Weg abgewichen ist, der als ein dem Fahrer bekannten Weg angesehen wird, indem bestimmt wird, dass eine erste Anzahl von gespeicherten Breadcrumbs, die dem ersten Straßensegment zugeordnet sind, unterhalb einer ersten Schwellenanzahl von Breadcrumbs für das erste Straßensegment liegt, wobei ein bekannter Weg basierend auf Breadcrumbs identifiziert wird, die zeitlich nacheinander aufgezeichnet werden, und wobei ein bestimmtes Straßensegment Teil eines bekannten Weges ist, wenn eine Anzahl von gespeicherten Breadcrumbs, die dem bestimmten Straßensegment zugeordnet sind, größer oder gleich einer Schwellenanzahl von Breadcrumbs für das bestimmte Straßensegment ist;
als Reaktion auf das Bestimmen, dass das Fahrzeug von dem ersten Weg abgewichen ist, der als bekannter Weg gilt:
Bestimmen einer Position entlang des ersten Weges, an der das Fahrzeug zurückzuführen ist, wobei das Bestimmen der Position entlang des ersten Weges, an der das Fahrzeug zurückzuführen ist, erfolgt, ohne vom Fahrer des Fahrzeugs aufgefordert zu werden;
Identifizieren eines zweiten Weges, der das Fahrzeug an der Position zu dem ersten Weg zurückführt; und
Beginnen, Fahranweisungen anzuzeigen, die dem zweiten Weg zugeordnet sind, der das Fahrzeug zu dem ersten Weg zurückführt.

2. Verfahren nach Anspruch 1, wobei das Bestimmen der Position entlang des ersten Weges, an der das Fahrzeug zurückzuführen ist, das Bestimmen der Position basierend auf einer Entfernung entlang des ersten Weges umfasst.

3. Verfahren nach Anspruch 2, wobei das Bestimmen der Position basierend auf der Entfernung entlang des ersten Weges das Identifizieren einer Position auf dem ersten Weg umfasst, die mindestens eine Schwellenentfernung entlang des ersten Weges von einem Punkt aus ist, an dem das Fahrzeug von dem ersten Weg abgewichen ist.

4. Verfahren nach einem der vorstehenden Ansprüche, wobei das Bestimmen der Position entlang des ersten Weges, an der das Fahrzeug zurückzuführen ist, das Bestimmen der Position basierend auf dem Verkehr entlang des ersten Weges umfasst.

5. Verfahren nach Anspruch 4, wobei das Bestimmen der Position basierend auf dem Verkehr entlang des ersten Weges das Identifizieren einer Position auf dem ersten Weg umfasst, die weiter entlang des ersten Weges entfernt ist als ein Punkt, an dem das Fahrzeug von dem ersten Weg abgewichen ist und für den zugehörige Verkehrsdaten angeben, dass ein Verkehrsaufkommen unter einer Verkehrsschwelle liegt.

6. Verfahren nach einem der vorhergehenden Ansprüche, ferner umfassend das Identifizieren des ersten Weges basierend auf einer Vielzahl von gespeicherten Breadcrumbs, die mindestens einem Segment des ersten Weges zugeordnet sind.

7. Verfahren nach Anspruch 6, wobei der identifizierte erste Weg einen vorhergesagten Weg umfasst und eine Anzahl von Breadcrumbs, die dem mindestens einen Segment zugeordnet sind, über einer zweiten Schwellenanzahl von Breadcrumbs für das mindestens eine Segment liegt.

8. Verfahren nach einem der vorstehenden Ansprüche, wobei der zweite Weg einen Weg umfasst, der sich von der Stelle, an der das Fahrzeug den ersten Weg verlassen hat, bis zur Stelle entlang des Weges erstreckt, an dem das Fahrzeug zurückzuführen ist.

9. Navigationssystem in einem Fahrzeug, wobei das Navigationssystem Folgendes umfasst:
einen Empfänger für ein globales Positionierungssystem, einen GPS-Empfänger, der konfiguriert ist, um Standortinformationen für das Fahrzeug zu erhalten;
eine zentrale Verarbeitungseinheit, die mit dem GPS-Empfänger gekoppelt und konfiguriert ist zum:
Aufzeichnen von Breadcrumbs, basierend auf den Standortinformationen, die vom GPS-Empfänger empfangen werden, während das Fahrzeug eine Straße entlang fährt, wobei jeder Breadcrumb eine aktuelle Position des Fahrzeugs, die Richtung des Fahrzeugs und die Uhrzeit und das Datum angibt, an dem sich das Fahrzeug an dieser Position befand;
Bestimmen, während das Navigationssystem einem Fahrer des Fahrzeugs keine Navigationsinformationen bereitstellt, dass das Fahrzeug von einem ersten Weg abgewichen ist, der als bekannter Weg angesehen wird, indem bestimmt wird, dass das Fahrzeug auf ein erstes Straßensegment abgebogen ist und dass eine erste Anzahl von aufgezeichneten Breadcrumbs, die dem ersten Straßensegment zugeordnet sind, unter einer ersten Schwellenanzahl von Breadcrumbs für das erste Straßensegment liegt, wobei ein bekannter Weg basierend auf Breadcrumbs identifiziert wird, die zeitlich nacheinander aufgezeichnet werden, und wobei ein bestimmtes Straßensegment Teil eines bekannten Weges ist, wenn eine Anzahl von gespeicherten Breadcrumbs, die dem jeweiligen Straßensegment zugeordnet sind, größer oder gleich einer Schwellenanzahl von Breadcrumbs für das jeweilige Straßensegment ist;
als Reaktion auf das Bestimmen, dass das Fahrzeug von dem ersten Weg abgewichen ist, der als bekannter Weg gilt:
Bestimmen einer Position entlang des ersten Weges, an der das Fahrzeug zurückzuführen ist, wobei das Bestimmen der Position entlang des ersten Weges, an der das Fahrzeug zurückzuführen ist, erfolgt, ohne vom Fahrer des Fahrzeugs aufgefordert zu werden;
Identifizieren eines zweiten Weges, der das Fahrzeug an der Position auf den ersten Weg zurückführt; und
Bereitstellen von Fahranweisungen, die dem zweiten Weg zugeordnet sind, der das Fahrzeug zu dem ersten Weg zurückführt.

10. Navigationssystem nach Anspruch 9, wobei die zentrale Verarbeitungseinheit konfiguriert ist, um Fahranweisungen bereitzustellen, wenn sie identifiziert, dass das Fahrzeug von dem ersten Weg abgewichen ist, indem sie einen zweiten Weg identifiziert, der sich von einem Abweichungspunkt, an dem das Fahrzeug von dem ersten Weg abgewichen ist, zu einem Zielpunkt auf dem ersten Weg erstreckt.

11. Navigationssystem nach Anspruch 10, ferner umfassend das Berechnen des Zielpunkts basierend auf einer vordefinierten Entfernung vom Abweichungspunkt.

12. Navigationssystem nach Anspruch 10, ferner umfassend das Berechnen des Zielpunkts basierend auf dem Verkehr entlang des ersten Weges.

## Revendications

1. Procédé mis en oeuvre par le biais d'un logiciel de navigation exécuté dans un système de navigation de véhicule, le procédé comprenant :
l'enregistrement de fils d'Ariane, dans lequel chaque fil d'Ariane indique une position actuelle du véhicule, la direction du véhicule et l'heure et la date auxquelles le véhicule était dans cette position ;
la détermination, alors que le logiciel de navigation ne fournit pas actuellement des informations de navigation à un conducteur du véhicule, que le véhicule a tourné sur un premier segment de route et dévié d'un premier parcours qui est considéré comme étant un parcours connu du conducteur en déterminant qu'un premier nombre de fils d'Ariane stockés associés au premier segment de route est inférieur à un premier nombre seuil de fils d'Ariane pour le premier segment de route, dans lequel un parcours connu est identifié sur la base des fils d'Ariane qui sont enregistrés consécutivement dans le temps, et dans lequel un segment de route particulier fait partie d'un parcours connu quand un nombre de fils d'Ariane stockés associés au segment de route particulier est supérieur ou égal à un nombre seuil de fils d'Ariane pour le segment de route particulier ;
en réponse à la détermination que le véhicule a dévié du premier parcours qui est considéré comme étant un parcours connu :
la détermination d'un emplacement le long du premier parcours au niveau duquel ramener le véhicule, dans lequel la détermination de l'emplacement le long du premier parcours au niveau duquel ramener le véhicule se produit sans être demandé par le conducteur du véhicule ;
l'identification d'un deuxième parcours qui ramène le véhicule au premier parcours au niveau de l'emplacement ; et
le démarrage de l'affichage d'instructions de conduites associées au deuxième parcours que ramène le véhicule au premier parcours.

2. Procédé selon la revendication 1, dans lequel la détermination de l'emplacement le long du premier parcours au niveau duquel ramener le véhicule comprend la détermination de l'emplacement sur la base d'une distance le long du premier parcours.

3. Procédé selon la revendication 2, dans lequel la détermination de l'emplacement sur la base de la distance le long du premier parcours comprend l'identification d'un emplacement sur le premier parcours qui est au moins une distance seuil sur le premier parcours à partir d'un point au niveau duquel le véhicule a dévié du premier parcours.

4. Procédé selon l'une quelconque des revendications précédentes, dans lequel la détermination de l'emplacement le long du premier parcours au niveau duquel ramener le véhicule comprend la détermination de l'emplacement sur la base d'un trafic le long du premier parcours.

5. Procédé selon la revendication 4, dans lequel la détermination de l'emplacement sur la base d'un trafic le long du premier parcours comprend l'identification d'un emplacement sur le premier parcours qui est plus éloigné le long du premier parcours qu'un point au niveau duquel le véhicule a dévié du premier parcours et pour lequel des données de trafic associées indiquent qu'un niveau de trafic est inférieur à un seuil de trafic.

6. Procédé selon l'une quelconque des revendications précédentes, comprenant en outre l'identification du premier parcours sur la base d'une pluralité de fils d'Ariane stockés associés à au moins un segment du premier parcours.

7. Procédé selon la revendication 6, dans lequel le premier parcours identifié comprend un parcours prédit et un nombre de fils d'Ariane stockés associés à l'au moins un segment est supérieur à un deuxième nombre seuil de fils d'Ariane pour l'au moins un segment.

8. Procédé selon l'une quelconque des revendications précédentes, dans lequel le deuxième parcours comprend un parcours qui s'étend de là où le véhicule a quitté le premier parcours à l'emplacement le long du parcours au niveau duquel ramener le véhicule.

9. Système de navigation dans un véhicule, le système de navigation comprenant :
un récepteur de système mondial de localisation, récepteur GPS, configuré pour obtenir des informations de localisation pour le véhicule ;
une unité centrale de traitement couplée au récepteur GPS et configurée pour :
enregistrer des fils d'Ariane sur la base des informations de localisation reçues à partir du récepteur GPS alors que le véhicule se déplace le long d'une route, dans lequel chaque fil d'Ariane indique une position actuelle du véhicule, la direction du véhicule et l'heure et la date auxquelles le véhicule était dans cette position ;
déterminer, alors que le système de navigation ne fournit pas actuellement des informations de navigation à un conducteur du véhicule, que le véhicule a dévié d'un premier parcours qui est considéré comme étant un parcours connu en déterminant que le véhicule a tourné sur un premier segment de route et qu'un premier nombre de fils d'Ariane enregistrés associés au premier segment de route est inférieur à un premier nombre seuil de fils d'Ariane pour le premier segment de route, dans lequel un parcours connu est identifié sur la base des fils d'Ariane qui sont enregistrés consécutivement dans le temps, et dans lequel un segment de route particulier fait partie d'un parcours connu quand un nombre de fils d'Ariane stockés associés au segment de route particulier est supérieur ou égal à un nombre seuil de fils d'Ariane pour le segment de route particulier ;
en réponse à la détermination que le véhicule a dévié du premier parcours qui est considéré comme étant un parcours connu :
déterminer un emplacement le long du premier parcours au niveau duquel ramener le véhicule, dans lequel la détermination de l'emplacement le long du premier parcours au niveau duquel ramener le véhicule se produit sans être demandé par le conducteur du véhicule ;
identifier un deuxième parcours qui ramène le véhicule au premier parcours au niveau de l'emplacement ; et
fournir des instructions de conduites associées au deuxième parcours que ramène le véhicule au premier parcours.

10. Système de navigation selon la revendication 9, dans lequel l'unité centrale de traitement est configurée pour fournir des instructions de conduite lors de l'identification que le véhicule a dévié du premier parcours en identifiant un deuxième parcours qui s'étend d'un point de déviation au niveau duquel le véhicule a dévié du premier parcours à un point de destination sur le premier parcours.

11. Système de navigation selon la revendication 10, comprenant en outre le calcul du pont de destination sur la base d'une distance prédéfinie par rapport au point de déviation.

12. Système de navigation selon la revendication 10, comprenant en outre le calcul du pont de destination sur la base d'un trafic le long du premier parcours.
